# EUROPEAN PATENT SPECIFICATION

(11) **EP 4 525 131 B1**
(45) Date of publication and mention of the grant of the patent: **13.08.2025**
(21) Application number: 23197715.8
(22) Date of filing: 15.09.2023
(51) Int. Cl.: H01M 10/42, H01M 10/48

(54) **BATTERY SYSTEM AND METHOD FOR MONITORING A BATTERY SYSTEM**
BATTERIESYSTEM UND VERFAHREN ZUR ÜBERWACHUNG EINES BATTERIESYSTEMS
SYSTÈME DE BATTERIE ET PROCÉDÉ DE SURVEILLANCE D'UN SYSTÈME DE BATTERIE

(43) Date of publication of application: 19.03.2025
(73) Proprietor: Samsung SDI Co., Ltd., Yongin-si, Gyeonggi-do 17084 (KR)
(72) Inventor: Ipek, Eymen, 8020 Graz (AT)
(74) Representative: Gulde & Partner

(56) References cited:
- CN-A- 109 038 701
- JP-A- 2008 109 742
- US-A1- 2016 072 158
- HONMA MASATSUGU: "CHARGING SYSTEM, BATTERY, AND CHARGER", EPODOC, EUROPEAN PATENT OFFICE, THE HAGUE, NL, 8 May 2008 (2008-05-08), XP002715225

## Description

### Field of the Disclosure

The present disclosure relates to a battery system capable of detecting a dimensional change of a housing and a method for monitoring such battery system.

### Technological Background

Recently, vehicles for transportation of goods and peoples have been developed that use electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator or a hydrogen fuel power cell. A hybrid vehicle may include a combination of an electric motor and conventional combustion engine. Generally, an electric-vehicle battery, EVB, or traction battery is a battery used to power the propulsion of battery electric vehicles, BEVs. Electric-vehicle batteries differ from starting, lighting, and ignition batteries in that they are designed to provide power for sustained periods of time. A rechargeable (or secondary) battery differs from a primary battery in that it is designed to be repeatedly charged and discharged, while the latter is designed to provide only an irreversible conversion of chemical to electrical energy. Low-capacity rechargeable batteries are used as power supplies for small electronic devices, such as cellular phones, notebook computers and camcorders, while high-capacity rechargeable batteries are used as power supplies for electric and hybrid vehicles and the like.

Generally, a rechargeable (or secondary) battery cell includes an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery cell via an electrochemical reaction of the positive electrode, the negative electrode, and the electrolyte solution. The shape of the case such as cylindrical or rectangular, may be selected based on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled to each other in series and/or in parallel so as to provide a high density such as for motor driving of a hybrid vehicle. For example, the battery module may be formed by interconnecting the electrode terminals of the plurality of unit battery cells in an arrangement or configuration depending on a desired amount of power and in order to realize a high-power rechargeable battery.

Battery modules can be constructed in either a block design or in a modular design. In the block design each battery is coupled to a common current collector structure and a common battery management system and the unit thereof is arranged in a housing. In the modular design, pluralities of battery cells are connected together to form submodules and several submodules are connected together to form the battery module. In automotive applications, battery systems generally include of a plurality of battery modules connected in series for providing a desired voltage. The battery modules may include submodules with a plurality of stacked battery cells and each stack includes cells connected in parallel that are, in turn, connected in series (*XpYs)* or cells connected in series that are, in turn, connected in parallel (*XsYp).*

A battery pack is a set of any number of (usually identical) battery modules. The battery modules may be configured in a series, parallel or a mixture of both to deliver the desired voltage, capacity, and/or power density. Components of a battery pack include the individual battery modules, and the interconnects, which provide electrical conductivity between the battery modules.

Exothermic decomposition of cell components may lead to a so-called thermal runaway. Generally, thermal runaway describes a process that accelerates due to increased temperature, in turn releasing energy that further increases temperature. Thermal runaway occurs in situations when an increase in temperature changes the conditions in a way that causes a further increase in temperature, often leading to a destructive result. In rechargeable battery systems, thermal runaway is associated with strong exothermic reactions that are accelerated by temperature rise. These exothermic reactions include combustion of flammable gas compositions within the battery pack housing. For example, when a cell is heated above a critical temperature (typically above 150°C) the battery cell can transition into a thermal runaway. The initial heating may be caused by a local failure, such as a battery cell internal short circuit, heating from a defect electrical contact, short circuit to a neighboring battery cell.

During the thermal runaway, a failed battery cell, i.e., a battery cell which has a local failure, may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore flammable and potentially toxic. The vented gas also causes a gas-pressure to increase inside the battery pack.

In this respect, CN 110285749 A discloses a battery pack for a vehicle which includes a battery pack body and multiple strain gauge sensors which are distributed on an inner surface of the upper casing of the battery pack and collect a deformation value of a battery pack shell. The deformation of the battery pack is monitored in real time and the deformation of the shell is mapped to a pressure difference between the inside and outside of the battery pack. When a deformation amount is greater than a threshold, a thermal runaway signal is generated.

Furthermore, US 2016/0072158 A1 discloses a device for managing an accumulator, including: a plurality of strain gauges including at least three strain gauges, the strain gauges being arranged to measure stresses along at least three distinct stress axes; a measuring device measuring strains undergone by each gauge along its stress axis; a reversible electrical switch; a calculating device controlling opening and closing of the electrical switch, depending on measurements carried out by the measuring device.

Additionally, it is known from EP 3 846 277 A1 to have a battery pack including a battery and a sensor configured to detect a state of the battery. The sensor includes an insulating layer, and a resistor on one side of the insulating layer, the resistor being formed of a chrome composite film. The sensor detects the state of the battery as a change in a resistance value of the resistor. The document further discloses a strain gauge that detects an expansion of the battery.

Furthermore, CN 109038701 A1 discloses an information processing method for a battery system. The method includes: powering the circuitry through a lithium-ion battery pack; determining a discharge rate of the lithium ion battery during the powering; and adjusting the cutoff voltage of the lithium ion battery pack based on the determined discharge rate.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, there is provided a battery system including: a battery pack including a housing and a plurality of battery cells accommodated within the housing, wherein the battery pack comprises a plurality of piezoelectric sensors attached to the housing to detect a dimensional change of the housing caused by an increased pressure inside of at least one of the battery cells due to a degassing of the at least one battery cell.

According to another aspect of the present disclosure, a method for monitoring a battery system is provided. The method includes the steps of:
a) providing a battery system as described in the above-mentioned paragraphs;
b) detecting a deformation of the housing caused by a pressure increase inside of at least one of battery cells inside of the housing; and
c) initiating safety measures when the deformation of the housing exceeds a certain threshold value.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic view of battery system according to a first embodiment of the invention.
- Fig. 2: illustrates a schematic cross section of a second embodiment of the invention.
- Fig. 3: illustrates a schematic cross section of a third embodiment of the invention.
- Fig. 4: illustrates a schematic cross section of a fourth embodiment of the invention.
- Fig. 5: illustrates a sectional view of the battery system according to the first embodiment in normal use conditions.
- Fig. 6: illustrates a sectional view of the battery system according to the first embodiment with a thermal event of a battery cell; and
- Fig. 7: illustrates a flow chart of a process according to the invention for monitoring a battery system and detecting a thermal failure of a battery cell within the battery system according to the first embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. Expressions such as "at least one of," when preceding a list of elements, modify the entire list of elements and do not modify the individual elements of the list.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, the invention is directed to a battery system, including a battery pack including a housing and a plurality of battery cells accommodated within the housing; a plurality of piezoelectric sensors attached to the housing to detect a dimensional change of the housing caused by an increased pressure inside of at least one of the battery cells due to a degassing of the at least one battery cell.

In other words, the invention is related to a battery system including a housing, wherein a plurality of battery cells is arranged within the housing to form a battery pack. A plurality of detector including piezoelectric sensors to detect a deformation of the housing by a malfunction of at least one battery cell is arranged at the housing.

The arrangement of the piezoelectric sensors on the housing makes it possible to detect a swelling of a battery cell due to a degassing of the electrolyte and an associated risk of thermal destruction in an early stage of the degassing process, before a serious fault occurs in the battery pack. In this way, the consequences of a defective battery cell can be mitigated and, for example, a thermal runaway of the entire battery pack by a chain reaction can be prevented.

According to the invention, a first set of piezoelectric sensors is arranged on a first side of the housing and a second set of piezoelectric sensors is arranged on a second side of the housing facing away from the first side of the housing. By arranging the piezoelectric sensors on two different sides of the housing, a deformation of the housing caused by a pressure increase in at least one of the battery cells can be detected in a simple way. In addition, such an arrangement of pressure sensors is particularly simple and inexpensive, since the sensors have to be arranged in the interior of the housing, whereby the assembly effort and the assembly costs can be reduced.

It is that the first set of piezoelectric sensors is arranged on an outside of the housing and the second set of piezoelectric sensors is arranged on an inside of the housing. The arrangement of a first set of piezoelectric sensors on an outer wall of the housing and a second set of piezoelectric sensors on the inner wall of the housing enables detection of the voltages in the corresponding housing wall. Thus, not only the deformation of the housing but also stresses initiated by the deformation, tensile stresses, compressive stresses or shear stresses, which are directly related to the pressure increase in the affected battery cell, can be detected.

According to another embodiment of the invention, the first set of piezoelectric sensors is arranged on a first outside surface of the housing and the second set of piezoelectric sensors is arranged on a second outside surface of the housing facing away from the first outside surface of the housing. Placing the first set of piezoelectric sensors and the second set of piezoelectric sensors on different outside surfaces of the housing is a simple and inexpensive way to detect deformation of the housing caused by a pressure increase inside at least one battery cell. The arrangement of the piezoelectric sensors on the outside surfaces of the housing also has the advantage that no cables or other connections need to be routed through the housing, thus avoiding the need for additional sealing of this feedthrough. This can ensure that there is no leakage problem due to additional openings in the housing and the potential risk of electrolyte leaking at such a feedthrough.

According to yet another embodiment of the battery system, the first set of piezoelectric sensors is arranged on a first inside surface of the housing and the second set of piezoelectric sensors is arranged on a second inside surface of the housing facing towards the first inside surface of the housing. By arranging the piezoelectric sensors on the inside of the housing, the sensors can be well protected from mechanical damage, especially from damage caused by stones, dirt or rolling grit that have been stirred up, or from contamination by splash water. This can increase the reliability and service life of the piezoelectric sensors.

In an embodiment of the invention the battery system further includes a detector connected to the piezoelectric sensors, wherein the detector is adapted to detect a change in voltage, resistance or current in the piezoelectric sensors caused by deformations of the housing. The detector allows to evaluate the signals from the piezoelectric sensors in a simple manner so that deformation of the housing is detected. A combination with an evaluation unit and an algorithm stored in the evaluation unit can be used to detect the area or the battery cell from which the deformation of the housing is triggered by outgassing and inflation of the battery cell concerned.

In another embodiment of the battery system, the piezoelectric sensors are configured to detect an elongation of the housing. Depending on the arrangement or orientation of the battery cells in the housing, degassing of a battery cell can primarily lead to a change in the length of the housing in the longitudinal or transverse direction. In addition, the circumference of the housing increases due to the increase in volume of the affected battery cell. Therefore, measuring a change in length may be suitable for detecting outgassing of a battery cell. In an embodiment of the battery system, the piezoelectric sensors are configured to detect a change in longitudinal and/or transversal direction of the housing.

According to another embodiment of the battery system, the piezoelectric sensors are configured to detect shearing or shear stresses of the housing. Degassing of a battery cell can also lead to shear on the housing and resulting shear stresses. This shear or the shear stresses can also be used in an advantageous way to detect a deformation of the housing due to the degassing of a battery cell.

In an embodiment of the invention, the battery system further includes time detector, wherein a temporal change of the housing is evaluated in order to detect a thermal runaway. By recording the change over time, it is possible to distinguish whether the housing is deforming slowly as part of a permissible aging process, or whether there is rapid expansion of the housing, which is due to the degassing of a battery cell and the associated rapid change in volume of the battery cell. When a degassing of a battery cell starts, the internal pressure of a battery pack increases abruptly. This pressure increase creates forces and tension on the housing walls. The piezoelectric sensors can detect this abrupt changes in dimension by measuring dimensional differences. Also, this is quite different from dimensional changes due to cell swelling or aging of the battery cells. While the degassing process happens within minutes, the change of dimension due to swelling or ageing happens within long time periods such as weeks or months.

According to another aspect of the present disclosure, the invention is related to a method for monitoring a battery system, wherein the method includes the steps of
a) providing a battery system as described above;
b) detecting a deformation of the housing caused by a pressure increase inside of at least one battery cell inside of the housing; and
c) initiating safety measures, when the deformation of the housing exceeds a certain threshold value.

The method allows to detect a thermal failure event of at least one battery cell of the battery system in an early stage so that safety measures can be taken to prevent further damage to the battery pack or the battery system.

According to an embodiment of the method, the safety measures include a shutdown of the affected battery cell or the battery pack. A shutdown of the affected battery cell or the whole battery pack can slow the degassing process and/or reduce heat generation in the affected battery cell, reducing the risk of spillover to adjacent battery cells. This can prevent a thermal runaway, i.e. a chain reaction in which the entire battery pack is thermally destroyed.

In an embodiment of the method, the safety measures include an increased cooling of the affected battery cell, the battery pack and/or the housing. Alternatively, or in addition to shutting down the affected battery cell or the battery pack, the cooling power supplied to the affected battery cell can also be increased to slow the degassing process and remove as much heat as possible from the affected battery cell to prevent thermal spillover to adjacent battery cells.

In yet another embodiment of the invention the deformation of the housing is related to a time interval and a critical event is detected, when the deformation of the housing per time interval exceeds a certain threshold value. By recording the change over time, it is possible to distinguish whether the housing is deforming slowly as part of a permissible aging process, or whether there is rapid expansion of the housing, which is due to the degassing of a battery cell and the associated rapid change in volume of the battery cell.

### Specific Embodiments

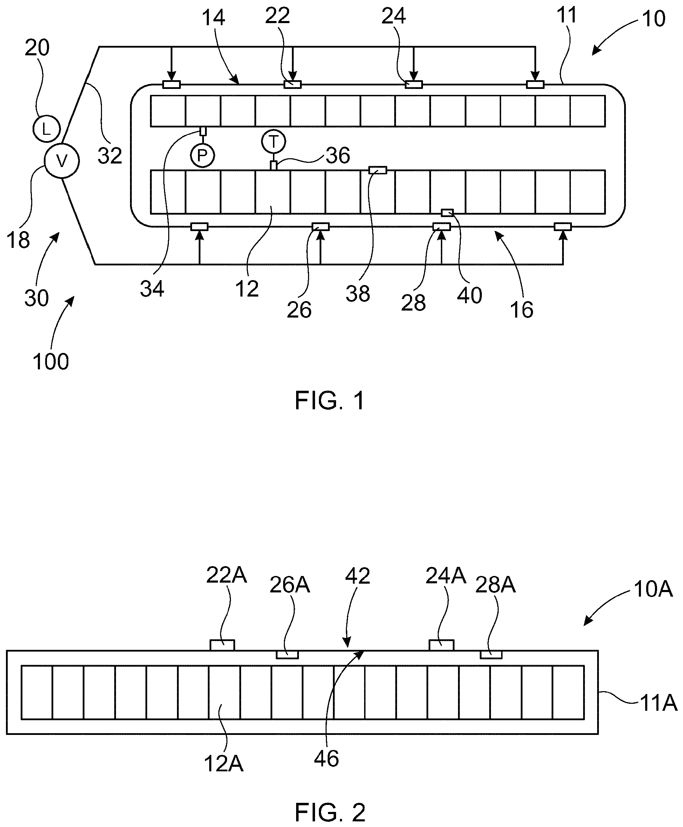

Fig. 1 is a schematic view illustrating a battery system 100 according to a first embodiment of the invention. The battery system 100 includes a battery pack 10 including a housing 11 and a plurality of battery cells 12 accommodated within the housing 11. The battery pack 10 further includes a plurality of piezoelectric sensors 22, 24, 26, 28 attached to the housing 11 to detect a dimensional change of the housing 11 caused by an increased pressure inside of at least one battery cell 12 due to a degassing of the battery cell 12.

The battery system 100 further includes a battery monitoring system 30 with a measuring circuit 32 and a detector 18 connected to the piezoelectric sensors 22, 24, 26, 28. The detector 18 is adapted to detect a change in voltage, resistance or current in the piezoelectric sensors 22, 24, 26, 28 caused by a deformation of the housing 11. The battery system 100 includes a time detector 20 in order to detect a change in the expansion of the housing 11 over time. The battery system 100 may further include a pressure sensor 34 to detect a pressure within the battery pack 10 and/or a temperature sensor 36 to detect a temperature within the battery pack 10.

As shown in Fig. 1, there is a first set of piezoelectric sensors 22, 24 arranged on a first side 14 of the housing 11 and a second set of piezoelectric sensors 26, 28 arranged on a second side 16 of the housing 11 facing away from the first side of the housing 11. The battery cells 12 may include a venting open 38 and/or a pressure relief valve 40 to limit a pressure increase in the battery cells 12 and to prevent an uncontrolled leakage of electrolyte from the battery cells 12. For the sake of illustration, one venting open 38 and one pressure relief 40 are shown in Fig. 1, but each battery cell 12 may be provides with at least one of the venting open and the pressure relief.

Fig. 2 shows a schematic cross section of a second embodiment of the invention. As shown in Fig. 2, a battery pack 10A includes a housing 11A, wherein a first set of piezoelectric sensors 22A, 24A is arranged on a first outside surface 42 of the housing 11 and a second set of piezoelectric sensors 26A, 28A is arranged on a first inside surface 46 of the housing 11, facing towards the first outside surface 42 of the housing 11A. This allows allow very accurate monitoring of a housing wall of the housing 11 for an early detection of a change in dimension caused by a degassing of a battery cell 12A.

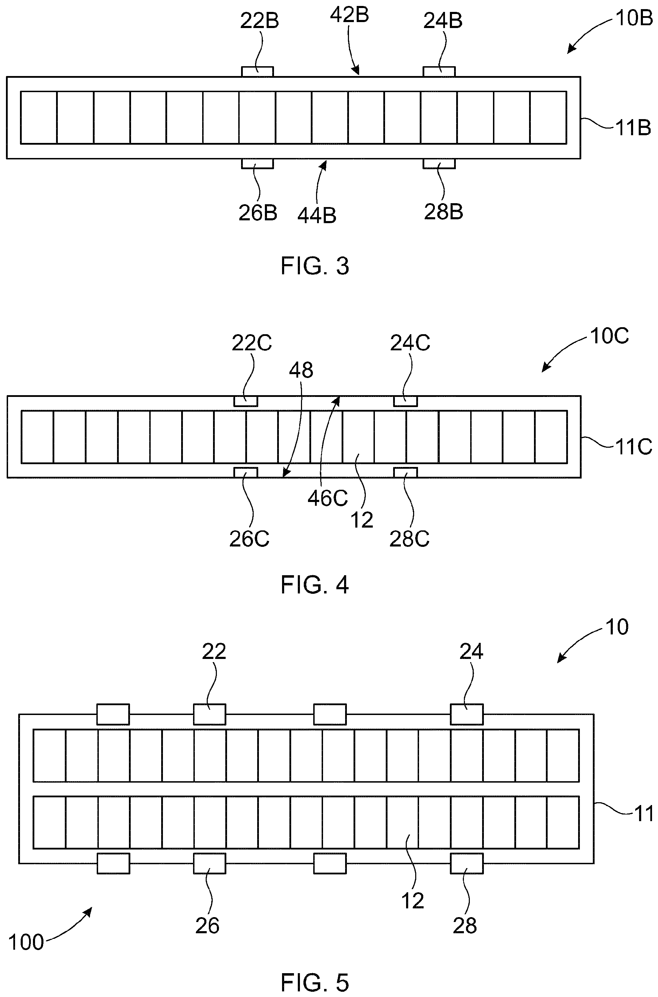

Fig. 3 shows a schematic cross section of a third embodiment of the invention. As shown in Fig. 3, a battery pack 10 includes a housing 11B, wherein a first set of piezoelectric sensors 22B, 24B is arranged on a first outside surface 42B of the housing 11B and a second set of piezoelectric sensors 26B, 28B is arranged on second outside surface 44B of the housing 11B, facing away from the first outside surface 42B of the housing 11. This arrangement allows to place all the piezoelectric sensors 22B, 24B, 26B, 28B outside of the housing 11B, so there is no need to have for additional sealing of feedthrough to connect the piezoelectric sensors 22, 24, 26, 28 inside of the housing 11B.

Fig. 4 shows a schematic cross section of a fourth embodiment of the invention. As shown in Fig. 4, a battery pack 10C includes a housing 11C, wherein a first set of piezoelectric sensors 22C, 24C is arranged on a first inside surface 46C of the housing 11C and a second set of piezoelectric sensors 26C, 28C is arranged on a second inside surface 48 of the housing 11C facing towards the first inside surface 46C of the housing 11C. By arranging the piezoelectric sensors 22C, 24C, 26C, 28C on the inside of the housing 11C, the piezoelectric sensors 22C, 24C, 26C, 28C can be well protected from mechanical damage, from damage caused by stones, dirt or rolling grit that have been stirred up, or from contamination by splash water. This can increase the reliability and lifetime of the piezoelectric sensors 22C, 24C, 26C, 28C.

Fig. 5 shows the battery system 100 according to the first embodiment in normal use conditions. In normal use condition, the housing 11 of the battery pack 10 is not affected by any thermal affect and there is no critical deformation of the housing 11.

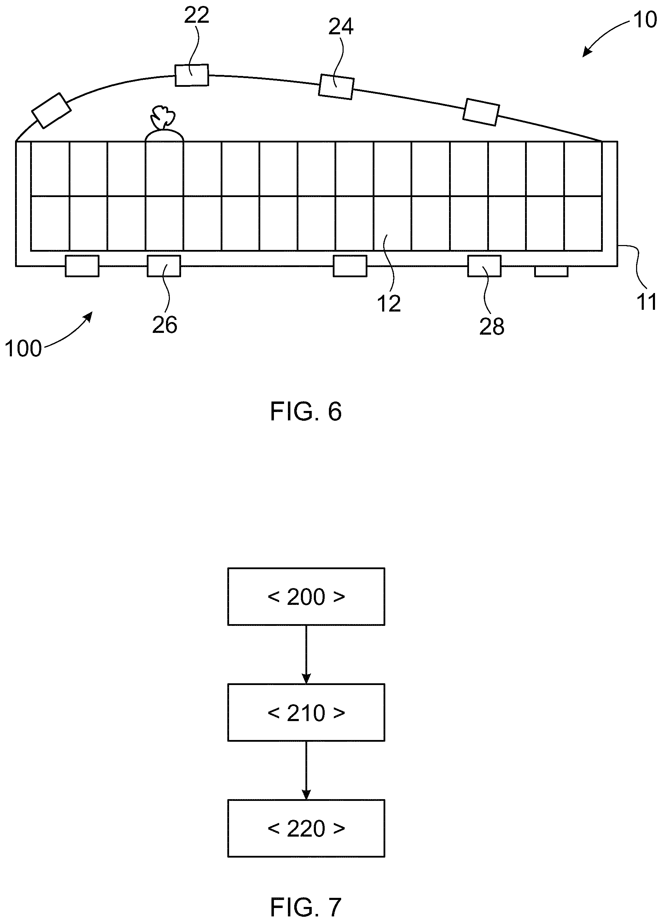

Fig. 6 shows the battery system 100 according to the first embodiment with a thermal event of at least one battery cell 12F of the battery pack 10. The degassing of the battery cell 12F deforms the housing 11 and increases its shape due to the pressure increase inside the housing 11, so that the wall of the housing 11 has a convex shape. This swelling of the housing 11 can be detected by the piezoelectric sensors 22, 24 so that a thermal event in the battery cell 12F is detected in time before this thermal event causes damage to neighboring battery cells 12.

The detection of deformation of the housing of the battery system by such piezoelectric sensors can also be implemented in the second to fourth embodiments described above.

Fig. 7 shows a flow chart of a process according to the invention for monitoring a battery system and detecting a thermal failure of at least one of battery cells within the battery system. Describing the process using the battery system of the first embodiment as an example, in a first step <200>, the battery system 100 as described in the previous sections is provided. In a second step <210>, a deformation of the housing 11 is detected by the piezoelectric sensors 22, 24, 26, 28 caused by a pressure increase inside of at least one battery cell 12F inside of the housing 11. In a third step <220>, safety measures are initiated, when the deformation of the housing 11 exceeds a certain threshold value. Those safety measures can include a shutdown of the affected battery cell 12F, a battery stack or the battery pack 10 and/or an increase cooling of the affected battery cell 12F, the affected battery stack or the battery pack 10 to slow the degassing process and/or reduce heat generation in the affected battery cell 12F, reducing the risk of spillover to adjacent battery cells 12. This can prevent a thermal runaway, i.e. a chain reaction in which the entire battery pack 10 is thermally destroyed.

The method allows to detect a thermal failure event of at least one battery cell 12F of the battery system 100 in an early stage so that safety measures can be taken to prevent further damage to the battery pack 10 or the battery system 100. The pressure increase in the battery cell 12 creates forces and tension on the housing walls of the housing 11. The piezoelectric sensors 22, 24, 26, 28 can detect this abrupt change in dimension by measuring dimensional differences. Also, this is quite different from allowable dimensional changes due to cell swelling or aging of the battery cells 12. While the degassing process happens within seconds or minutes, the change of dimension due to swelling or ageing happens within long time periods such as weeks or months.

### Reference signs

- 10: battery pack
- 11: housing
- 12: battery cells
- 12F: affected battery cell
- 14: first side
- 16: second side
- 18: detection means

- 20: time detection means
- 22: first piezoelectric sensor
- 24: second piezoelectric senor
- 26: third piezoelectric sensor
- 28: fourth piezoelectric sensor

- 30: battery monitoring system
- 32: measuring circuit
- 34: pressure sensor
- 36: temperature sensor
- 38: venting open

- 40: pressure relief valve
- 42: first outside surface
- 44: second outside surface
- 46: first inside surface
- 48: second inside surface

- 100: battery system

## Claims

1. A battery system (100), comprising:
a battery pack (10) comprising a housing (11) and a plurality of battery cells (12) accommodated within the housing (11); wherein the battery pack (10) comprises a plurality of piezoelectric sensors (22, 24, 26, 28) attached to the housing (11) to detect a dimensional change of the housing (11) caused by an increased pressure inside of at least one of the battery cells (12) due to a degassing of the at least one battery cell, wherein a first set of piezoelectric sensors (22, 24) is arranged on a first side (14) of the housing (11) and a second set of piezoelectric sensors (26, 28) is arranged on a second side (16) of the housing (11) facing away from the first side (14) of the housing (11).

2. The battery system (100) according to claim 1, wherein the first set of piezoelectric sensors (22A, 24A) is arranged on an outside of the housing (11A) and the second set of piezoelectric sensors (26A, 28A) is arranged inside of the housing (11A).

3. The battery system (100) according to claim 1, wherein the first set of piezoelectric sensors (22B, 24B) is arranged on a first outside surface (42B) of the housing (11B) and the second set of piezoelectric sensors (26B, 28B) is arranged on a second outside surface (44B) of the housing (11B) facing away from the first outside surface (42B) of the housing (11B).

4. The battery system (100) according to claim 1, wherein the first set of piezoelectric sensors (22C, 24C) is arranged on a first inside surface (46C) of the housing (11C) and the second set of piezoelectric sensors (26C, 28C) is arranged on a second inside surface (48C) of the housing (11C), facing towards the first inside surface (46C) of the housing (11C).

5. The battery system (100) according to any of the preceding claims, further comprising a detector (18) connected to the piezoelectric sensors (22, 24, 26, 28), wherein the detector (18) is adapted to detect a change in voltage, resistance or current in the piezoelectric sensors (22, 24, 26, 28) caused by a deformation of the housing (11).

6. The battery system (100) according to any of the preceding claims, wherein the piezoelectric sensors (22, 24, 26, 28) are configured to detect an elongation of the housing (11).

7. The battery system (100) according to any of the preceding claims, wherein the piezoelectric sensors (22, 24, 26, 28) are configured to detect a change in longitudinal or transverse direction of the housing (11).

8. The battery system (100) according to any one of the preceding claims, wherein the piezoelectric sensors (22, 24, 26, 28) are configured to detect shearing of the housing (11).

9. The battery system (100) according to any of the preceding claims, wherein the battery system further comprises time detector (20), wherein a temporal change of the housing (11) is evaluated in order to detect a thermal runaway.

10. A method for monitoring a battery system (100), wherein the method comprises the steps of:
a) providing a battery system (100) as defined in claim 1;
b) detecting a deformation of the housing (11) caused by a pressure increase inside of at least one of the battery cells (12) inside of the housing (11); and
c) initiating safety measures when the deformation of the housing (11) exceeds a certain threshold value.

11. The method for monitoring a battery system (100) according to claim 10, wherein the safety measures comprise a shutdown of the at least one of the battery cells (12) or the battery pack (10).

12. The method for monitoring a battery system (100) according to claim 10 or 11, wherein the safety measures comprise an increased cooling of the least one of the battery cells (12) and/or the housing (11).

13. The method for monitoring a battery system (100) according to claim 10 to 12, wherein the deformation of the housing (11) is related to a time interval and a critical event is detected, when the deformation of the housing (11) per time interval exceeds a certain threshold value.

## Patentansprüche

1. Batteriesystem (100), umfassend:
ein Batteriepack (10), das ein Gehäuse (11) und eine Mehrzahl von im Gehäuse (11) untergebrachten Batteriezellen (12) umfasst; wobei das Batteriepack (10) eine Mehrzahl von piezoelektrischen Sensoren (22, 24, 26, 28) umfasst, die am Gehäuse (11) befestigt sind, um eine Dimensionsänderung des Gehäuses (11) zu detektieren, die durch einen erhöhten Druck innerhalb zumindest einer der Batteriezellen (12) aufgrund einer Entgasung der mindestens einen Batteriezelle hervorgerufen wird, wobei auf einer ersten Seite (14) des Gehäuses (11) ein erster Satz piezoelektrischer Sensoren (22, 24) angeordnet ist und auf einer zweiten Seite (16) des Gehäuses (11), die von der ersten Seite (14) des Gehäuses (11) abgewandt ist, ein zweiter Satz von piezoelektrischer Sensoren (26, 28) angeordnet ist.

2. Batteriesystem (100) nach Anspruch 1, wobei der erste Satz piezoelektrischer Sensoren (22A, 24A) auf einer Außenseite des Gehäuses (11A) angeordnet ist und der zweite Satz piezoelektrischer Sensoren (26A, 28A) auf einer Innenseite des Gehäuses (11A) angeordnet ist.

3. Batteriesystem (100) nach Anspruch 1, wobei der erste Satz piezoelektrischer Sensoren (22B, 24B) an einer ersten Außenfläche (42B) des Gehäuses (11B) angeordnet ist und der zweite Satz piezoelektrischer Sensoren (26B, 28B) an einer zweiten Außenfläche (44B) des Gehäuses (11B), die von der ersten Außenfläche (42B) des Gehäuses (11B) abgewandt ist, angeordnet ist.

4. Batteriesystem (100) nach Anspruch 1, wobei der erste Satz piezoelektrischer Sensoren (22C, 24C) an einer ersten Innenfläche (46C) des Gehäuses (11C) angeordnet ist und der zweite Satz piezoelektrischer Sensoren (26C, 28C) an einer zweiten Innenfläche (48C) des Gehäuses (11C), die der ersten Innenfläche (46C) des Gehäuses (11C) zugewandt ist, angeordnet ist.

5. Batteriesystem (100) nach einem der vorangehenden Ansprüche, ferner umfassend einen Detektor (18), der mit den piezoelektrischen Sensoren (22, 24, 26, 28) verbunden ist, wobei der Detektor (18) dazu ausgelegt ist, eine durch eine Verformung des Gehäuses (11) hervorgerufene Änderung der Spannung, des Widerstands oder der Stromstärke in den piezoelektrischen Sensoren (22, 24, 26, 28) zu detektieren.

6. Batteriesystem (100) nach einem der vorangehenden Ansprüche, wobei die piezoelektrischen Sensoren (22, 24, 26, 28) dazu ausgestaltet sind, eine Dehnung des Gehäuses (11) zu detektieren.

7. Batteriesystem (100) nach einem der vorangehenden Ansprüche, wobei die piezoelektrischen Sensoren (22, 24, 26, 28) dazu ausgestaltet sind, eine Änderung in der Längs- oder Querrichtung des Gehäuses (11) zu detektieren.

8. Batteriesystem (100) nach einem der vorangehenden Ansprüche, wobei die piezoelektrischen Sensoren (22, 24, 26, 28) dazu ausgestaltet sind, eine Scherung des Gehäuses (11) zu detektieren.

9. Batteriesystem (100) nach einem der vorangehenden Ansprüche, wobei das Batteriesystem ferner einen Zeitdetektor (20) umfasst, wobei eine zeitliche Veränderung des Gehäuses (11) evaluiert wird, um ein thermisches Durchgehen zu detektieren.

10. Verfahren zur Überwachung eines Batteriesystems (100), wobei das Verfahren die folgenden Schritte umfasst:
a) Bereitstellen eines Batteriesystems (100) nach Anspruch 1;
b) Detektieren einer Verformung des Gehäuses (11), die durch einen Druckanstieg in zumindest einer der Batteriezellen (12) im Gehäuse (11) hervorgerufen wird; und
c) Einleiten von Sicherheitsmaßnahmen, wenn die Verformung des Gehäuses (11) einen bestimmten Schwellenwert überschreitet.

11. Verfahren zur Überwachung eines Batteriesystems (100) nach Anspruch 10, wobei die Sicherheitsmaßnahmen eine Abschaltung der zumindest einen der Batteriezellen (12) oder des Batteriepacks (10) umfassen.

12. Verfahren zur Überwachung eines Batteriesystems (100) nach Anspruch 10 oder 11, wobei die Sicherheitsmaßnahmen eine verstärkte Kühlung der zumindest einen der Batteriezellen (12) und/oder des Gehäuses (11) umfassen.

13. Verfahren zur Überwachung eines Batteriesystems (100) nach Anspruch 10 bis 12, wobei sich die Verformung des Gehäuses (11) auf ein Zeitintervall bezieht und ein kritisches Ereignis detektiert wird, wenn die Verformung des Gehäuses (11) pro Zeitintervall einen bestimmten Schwellenwert überschreitet.

## Revendications

1. Système de batterie (100), comportant :
un bloc-batterie (10) comportant un boîtier (11) et une pluralité de cellules de batterie (12) logées à l'intérieur du boîtier (11) ; dans lequel le bloc-batterie (10) comporte une pluralité de capteurs piézoélectriques (22, 24, 26, 28) fixés au boîtier (11) pour détecter un changement dimensionnel du boîtier (11) provoqué par une pression accrue à l'intérieur d'au moins une des cellules de batterie (12) en raison d'un dégazage de l'au moins une cellule de batterie, dans lequel un premier ensemble de capteurs piézoélectriques (22, 24) est agencé sur un premier côté (14) du boîtier (11) et un deuxième ensemble de capteurs piézoélectriques (26, 28) est agencé sur un deuxième côté (16) du boîtier (11) orienté à l'opposé du premier côté (14) du boîtier (11).

2. Système de batterie (100) selon la revendication 1, dans lequel le premier ensemble de capteurs piézoélectriques (22A, 24A) est agencé sur un extérieur du boîtier (11A) et le deuxième ensemble de capteurs piézoélectriques (26A, 28A) est agencé à l'intérieur du boîtier (11A).

3. Système de batterie (100) selon la revendication 1, dans lequel le premier ensemble de capteurs piézoélectriques (22B, 24B) est agencé sur une première surface extérieure (42B) du boîtier (11B) et le deuxième ensemble de capteurs piézoélectriques (26B, 28B) est agencé sur une deuxième surface extérieure (44B) du boîtier (11B) orientée à l'opposé de la première surface extérieure (42B) du boîtier (11B).

4. Système de batterie (100) selon la revendication 1, dans lequel le premier ensemble de capteurs piézoélectriques (22C, 24C) est agencé sur une première surface intérieure (46C) du boîtier (11C) et le deuxième ensemble de capteurs piézoélectriques (26C, 28C) est agencé sur une deuxième surface intérieure (48C) du boîtier (11C), orientée vers la première surface intérieure (46C) du boîtier (11C).

5. Système de batterie (100) selon l'une quelconque des revendications précédentes, comportant en outre un détecteur (18) connecté aux capteurs piézoélectriques (22, 24, 26, 28), dans lequel le détecteur (18) est adapté pour détecter un changement de tension, de résistance ou de courant dans les capteurs piézoélectriques (22, 24, 26, 28) provoqué par une déformation du boîtier (11).

6. Système de batterie (100) selon l'une quelconque des revendications précédentes, dans lequel les capteurs piézoélectriques (22, 24, 26, 28) sont configurés pour détecter un allongement du boîtier (11).

7. Système de batterie (100) selon l'une quelconque des revendications précédentes, dans lequel les capteurs piézoélectriques (22, 24, 26, 28) sont configurés pour détecter un changement de direction longitudinale ou transversale du boîtier (11).

8. Système de batterie (100) selon l'une quelconque des revendications précédentes, dans lequel les capteurs piézoélectriques (22, 24, 26, 28) sont configurés pour détecter un cisaillement du boîtier (11).

9. Système de batterie (100) selon l'une quelconque des revendications précédentes, dans lequel le système de batterie comporte en outre un détecteur de temps (20), dans lequel un changement temporel du boîtier (11) est évalué afin de détecter un emballement thermique.

10. Procédé de surveillance d'un système de batterie (100), dans lequel le procédé comporte les étapes suivantes :
a) la fourniture d'un système de batterie (100) selon la revendication 1 ;
b) la détection d'une déformation du boîtier (11) provoquée par une augmentation de pression à l'intérieur d'au moins une des cellules de batterie (12) à l'intérieur du boîtier (11) ; et
c) la prise de mesures de sécurité lorsque la déformation du boîtier (11) dépasse une certaine valeur seuil.

11. Procédé de surveillance d'un système de batterie (100) selon la revendication 10, dans lequel les mesures de sécurité comportent un arrêt de l'au moins une des cellules de batterie (12) ou du bloc-batterie (10).

12. Procédé de surveillance d'un système de batterie (100) selon la revendication 10 ou 11, dans lequel les mesures de sécurité comportent un refroidissement accru de l'au moins une des cellules de batterie (12) et/ou du boîtier (11).

13. Procédé de surveillance d'un système de batterie (100) selon les revendications 10 à 12, dans lequel la déformation du boîtier (11) est liée à un intervalle de temps et un événement critique est détecté lorsque la déformation du boîtier (11) par intervalle de temps dépasse une certaine valeur seuil.
